# EUROPÄISCHE PATENTSCHRIFT

(11) **EP 0 806 326 B1**
(45) Veröffentlichungstag und Bekanntmachung des Hinweises auf die Patenterteilung: **02.01.2004**
(21) Anmeldenummer: 97107356.4
(22) Anmeldetag: 05.05.1997
(51) Int. Cl.: B60R 22/41, B60R 22/415

(54) **Gurtaufroller für Fahrzeugsicherheitsgurte**
Retractor for motor vehicle seat belts
Rétracteur pour ceintures de sécurité de véhicule automobile

(30) Priorität: 06.05.1996 DE 29608209 U
(43) Veröffentlichungstag der Anmeldung: 12.11.1997
(73) Patentinhaber: TRW Occupant Restraint Systems GmbH & Co. KG, 73551 Alfdorf (DE)
(72) Erfinder: Huber, Andreas, 73568 Durlangen (DE)
(74) Vertreter: Degwert, Hartmut, Dipl.-Phys.

(56) Entgegenhaltungen:
- EP-A- 0 473 832
- EP-A- 0 543 520
- DE-U- 8 803 659
- DE-U- 9 318 286
- US-A- 4 809 926

## Beschreibung

Die Erfindung betrifft einen Gurtaufroller für Fahrzeugsicherheitsgurte.

Ein in dem gattungsbildenden DE 93 18 286 U1 beschriebener Gurtaufroller hat eine in einem Gehäuse drehbar gelagerte Gurtspule, einen Sperrmechanismus zur Blockierung der Gurtspulendrehung, einen Auslösemechanismus, der eine relativ zur Gurtspule begrenzt verdrehbare Steuerscheibe aufweist, durch deren Relativdrehung zur Gurtspule der Sperrmechanismus aktivierbar ist, und ein Schaltelement, das zwischen zwei stabilen Schaltstellungen umschaltbar ist. In der ersten Schaltstellung aktiviert das Schaltelement den Sperrmechanismus und gibt in der zweiten Stellung den Sperrmechanismus frei. Ein Planetenzahnradgetriebe hat ein drehfest an die Gurtspule angeschlossenes Sonnenrad, ein gehäusefestes Hohlrad und zwei Planetenräder, die eine Außenverzahnung aufweisen und mit dem Sonnenrad und dem Hohlrad in Eingriff stehen. Das Schaltelement ist als schwenkbar gelagerte Schaltwippe ausgebildet, die zwei Betätigungsarme und eine Schaltklinke aufweist, die in der ersten Schaltstellung an der Steuerscheibe angreift und sie drehfest hält. Die Außenverzahnung des Planetenrads hat einen in Radialrichtung überlangen Schaltzahn, der in einer bestimmten Umlauf- und Drehstellung des Planetenrads mit einem der Betätigungsarme der Schaltwippe direkt in Eingriff gelangt und die Schaltwippe in ihre jeweils andere Stellung drückt.

In der EP 0 473 832 A ist ein Gurtaufroller mit einer Vorrichtung gezeigt, die ab einem bestimmten Wert des Außendurchmessers des Gurtbandwickels auf der Gurtspule eine Aktivierung des Sperrmechanismus verhindert.

Beim Ablegen des Gurtes und Aufrollen des Gurtbandes auf der Gurtspule des Gurtaufrollers kann es zu einer ungewollten Aktivierung des Sperrmechanismus kommen, wenn das Gurtband auf dem Fahrzeugsitz auftrifft und durch die Elastizität der Sitzpolsterung kurzzeitig Gurtband wieder abgezogen wird. Auch bei Schrägstellung des Fahrzeugs kann es nach dem Ablegen des Gurtes zu einer unerwünschten Aktivierung des Sperrmechanismus kommen. Zur Vermeidung einer solchen unerwünschten Sperrung wird der Auslösemechanismus bei nahezu vollständig aufgewickeltem Gurtband inaktiviert. Der dazu vorgesehene Steuermechanismus umfaßt ein drehfest an die Gurtspule angekoppeltes Synchronisationszahnrad und ein Kupplungszahnrad, das bei einem bestimmten Wert des Außendurchmessers des Gurtbandwickels mit dem Synchronisationszahnrad in Eingriff kommt.

Durch die im Patentanspruch 1 angegebene Erfindung wird ein Gurtaufroller zur Verfugung gestellt, dessen Sperrmechanismus mit hoher Genauigkeit und Reproduzierbarkeit inaktiviert werden kann, wenn eine vorherbestimmte Gurtbandmenge auf der Gurtspule aufgewickelt ist.

Da der Gurtaufroller mit einer Kindersicherung ausgestattet ist, die in an sich bekannter Weise dazu dient, den Sperrmechanismus des Gurtaufrollers zu aktivieren, um einen Kindersitz unverrückbar an einem Fahrzeugsitz festzulegen, wird erfindungsgemäß ein und dasselbe Planetenradgetriebe verwendet, um die Kindersicherung zu aktivieren oder den Sperrmechanismus (bei nahezu vollständig aufgewickeltem Gurtband) zu inaktivieren.

Zur Inaktivierung des gurtbandsensitiven Teils des Auslösemechanismus bewirkt gemäß der bevorzugten Ausführungsform die Schaltwippe in ihrer Sperrstellung eine drehfeste Kopplung der Steuerscheibe mit der Gurtspule. Da somit eine Relativdrehung zwischen Gurtspule und Steuerscheibe unterbunden ist, wenn sich die Schaltwippe in ihrer Sperrstellung befindet, kann keine gurtbandsensitive Auslösung erfolgen.

Für den fahrzeugsensitiven Teil des Auslösemechanismus ist bei der bevorzugten Ausführungsform vorgesehen, daß die Schaltwippe in ihrer Sperrstellung einen Sensorhebel des fahrzeugsensitiven Auslösesensors inaktiviert.

Weitere Merkmale und Vorteile der Erfindung ergeben sich aus der folgenden Beschreibung einer bevorzugten Ausführungsform und aus der Zeichnung, auf die Bezug genommen wird. In der Zeichnung zeigen:
Fig. 1 eine aufgeschnittene Perspektivansicht der Steuerseite eines Gurtaufrollers;

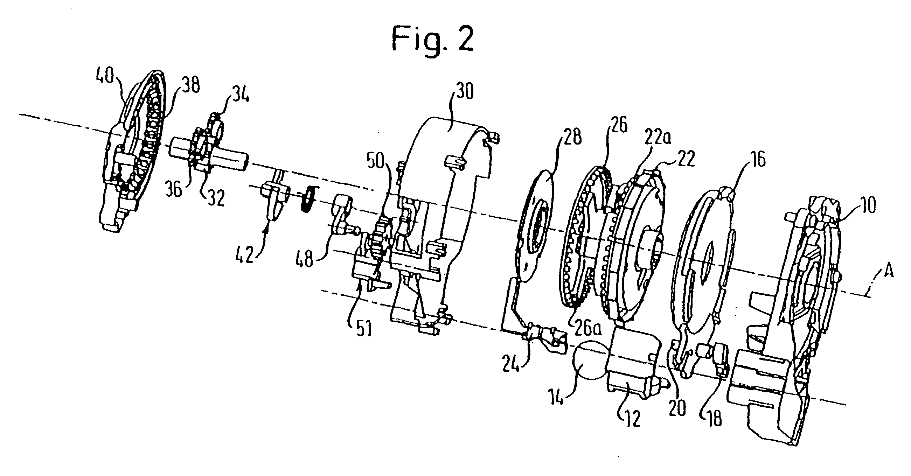

Fig. 2 eine Explosionsansicht des Steuerteils des Gurtaufrollers; und
Fig. 3a sowie 3b die Schaltzustände einer Inaktivierungseinrichtung für den Sperrmechanismus des Gurtaufrollers.

Von dem erfindungsgemäßen Gurtaufroller wird hier nur die sogenannte Steuerseite beschrieben, da alle übrigen Bestandteile herkömmlich ausgebildet sind. Insbesondere umfaßt der Gurtaufroller eine Gurtspule, die zwischen den Schenkeln eines U-förmigen Rahmens drehbar gelagert ist. Ferner ist ein Sperrmechanismus vorhanden, der auf einen fahrzeugsensitiven und gurtbandsensitiven Auslösemechanismus anspricht und die Gurtspule im Notfall lasttragend sperrt.

Seitlich an den Rahmen des Gurtaufrollers angesetzt ist eine Sensor-Trägerplatte 10, die ein Sensorgehäuse 12 mit einer darin eingelegten Kugel 14 aufnimmt. Um die Achse A des Gurtaufrollers verdrehbar gelagert ist eine Betätigungsscheibe 16, an der eine Auslöseklinke 18 an einem Nocken 20 schwenkbar gelagert ist. Die Betätigungsscheibe 16 aktiviert bei ihrer Drehung den Sperrmechanismus, indem zwei lasttragende Klinken in Sperrzahnräder an der Gurtspule des Gurtaufrollers eingesteuert werden.

An die Gurtspule des Gurtaufrollers ist eine Kupplungsscheibe 22 drehfest angeschlossen. Sie trägt an ihrem Außenumfang eine Verzahnung, mit der ein Sensorhebel 24 zusammenwirkt, der durch die Kugel 14 angehoben werden kann und dann die Auslöseklinke 18 mit der Außenverzahnung an der Kupplungsscheibe 22 in Eingriff bringt.

Relativ zur Gurtspule begrenzt verdrehbar um die Achse A angeordnet ist eine Steuerscheibe 26. Sie ist mit einer Trägheitsscheibe 28 drehfest gekoppelt. Auf ihren einander zugewandten Seiten tragen die Kupplungsscheibe 22 und die Steuerscheibe 26 eine Außenverzahnung 22a bzw. 26a. Diese Außenverzahnungen 22a, 26a sind einander gleich ausgebildet.

Die Betätigungsscheibe 16, die Kupplungsscheibe 22 und die Steuerscheibe 26 mit der Trägheitsscheibe 28 sind im Inneren einer Abdeckung 30 aufgenommen. An der Außenseite dieser Abdeckung 30 ist ein Planetenzahnradgetriebe angeordnet. Dieses besteht aus einem drehfest mit der Gurtspule des Gurtaufrollers gekoppelten Sonnenrad 32, zwei Planetenrädern 34, 36 und einem innenverzahnten Hohlrad 38, das in einer Abdeckkappe 40 gebildet ist.

Die Planetenräder 34, 36 sind mit Schaltnocken oder Schaltzähnen versehen, durch die zwei Schaltwippen betätigbar sind.

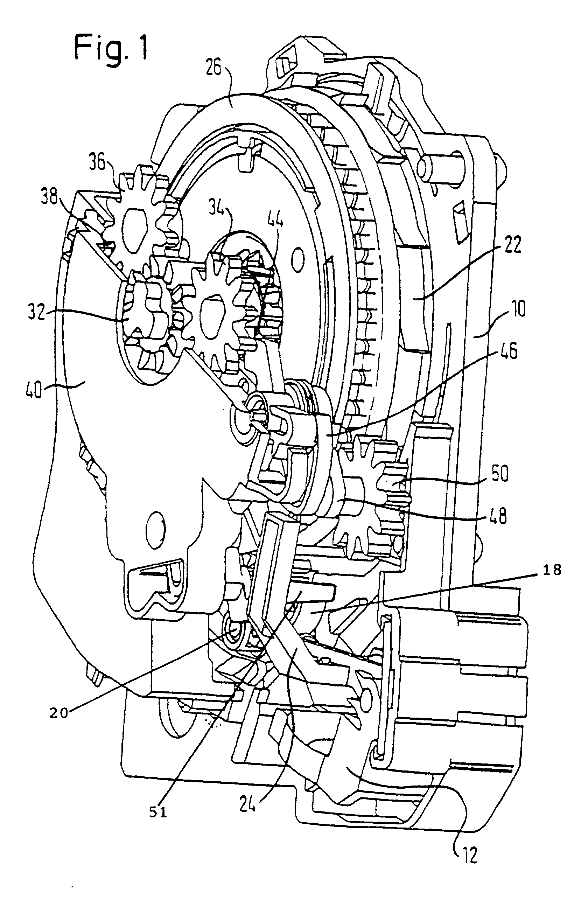

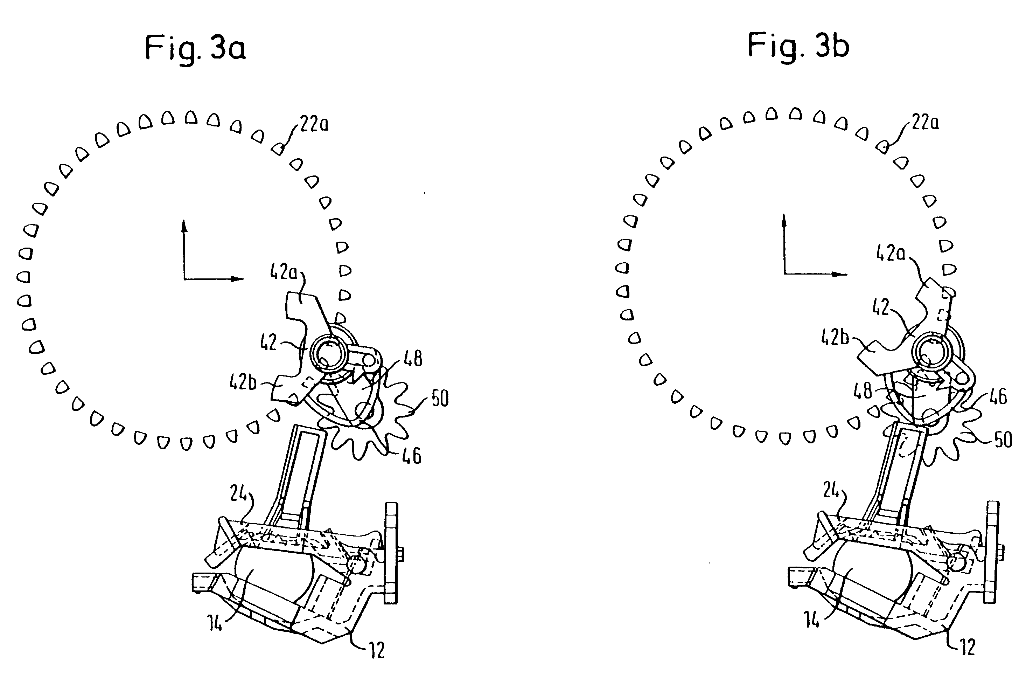

Die erste Schaltwippe 42 kann zwei stabile Schaltstellungen einnehmen, die in den Fign. 3a und 3b veranschaulicht sind. Sie weist zwei Betätigungsarme 42a, 42b auf, an denen Schaltnocken an den Planetenrädern bei Erreichen eines bestimmten Drehwinkels der Gurtspule anstoßen. In Fig. 1 ist ein solcher Schaltnocken mit 44 bezeichnet. Beim Anstoßen eines Schaltnockens auf einem der Betätigungsarme 42a, 42b wird die Schaltwippe 42 in die jeweils andere Stellung umgeschaltet.

Die Schaltwippe 42 trägt einen bogenförmigen Schaltarm 46 und ist mit einem Schwenkarm 48 gekoppelt, an dessen freiem Ende ein Zahnrad 50 drehbar gelagert ist. Bei der in Fig. 3a gezeigten Schaltstellung der Schaltwippe 42 hält der Schwenkarm 48 das Zahnrad 50 außer Eingriff mit den beiden Außenverzahnungen 22a, 26a der Kupplungsscheibe 22 und der Steuerscheibe 26. Bei der in Fig. 3 gezeigten Schaltstellung der Schaltwippe 42 greift das Zahnrad 50 gleichzeitig in beide Außenverzahnungen der Kupplungsscheibe 22 und der Steuerscheibe 26, so daß diese drehfest miteinander gekoppelt sind. Gleichzeitig drückt der Schaltarm 46 gegen einen hochragenden Ansatz des Sensorhebels 24 und hält diesen in einer abgesenkten Stellung.

Eine zweite Schaltwippe 51 ist gleichfalls zwischen zwei stabilen Schaltstellungen verschwenkbar, und auch diese Schaltwippe wird durch Steuernocken an den Planetenrädern 34, 36 betätigt. In der einen Schaltstellung aktiviert diese Schaltwippe 51 den Sperrmechanismus des Gurtaufrollers, indem sie die Auslöseklinke 18 anhebt. In der anderen Schaltstellung gibt die Schaltwippe 51 die Auslöseklinke 18 frei, so daß diese fahrzeugsensitiv durch die Kugel 14 und den Sensorhebel 24 betätigbar ist.

Im normalen Fahrbetrieb bei angelegtem Sicherheitsgurt befindet sich die Schaltwippe 42 in der in Fig. 3a gezeigten Ausgangsstellung. Die Schaltwippe 51 befindet sich gleichfalls in einer Ausgangsstellung, in welcher sie den Sensorhebel 24 freigibt. Der Sperrmechanismus des Gurtaufrollers ist in diesem Zustand sowohl fahrzeugsensitiv als auch gurtbandsensitiv aktivierbar.

Nach dem Ablegen des Gurtbandes wird dieses auf der Gurtspule aufgerollt. Bei einem bestimmten Drehwinkel der Gurtspule, der dem nahezu vollständig aufgewickelten Gurtband entspricht, stößt der Schaltnocken 44 gegen den Betätigungsarm 42a der Schaltwippe 42, so daß diese in die in Fig. 3b gezeigte Schaltstellung verschwenkt wird. In dieser Stellung sind die Kupplungsscheibe 22 und die Steuerscheibe 26 durch das Zahnrad 50 drehfest miteinander gekoppelt. Eine gurtsensitive Auslösung des Sperrmechanismus ist somit unterbunden. Auch eine fahrzeugsensitive Auslösung ist unterbunden, da der Sensorhebel 24 durch den Schaltarm 46 niedergehalten wird. Eine unbeabsichtigte Sperrung der Gurtspule in diesem Zustand wird somit zuverlässig verhindert.

Die Umschaltung der Schaltwippe 42 in die normale, in Fig. 3a gezeigte Stellung erfolgt durch einen weiteren Schaltnocken an einem der Planetenräder 34, 36, sobald eine vorbestimmte Gurtbandmenge von der Gurtspule abgewickelt ist.

Die zweite Schaltwippe 51 dient der Umschaltung des Gurtaufrollers in den sogenannten automatisch sperrenden Modus, der zur Sicherung von Kindersitzen oder Lasten benötigt wird. Dieser Betriebsmodus des Gurtaufrollers wird aktiviert, indem Gurtband von der Gurtspule nahezu vollständig abgezogen und dann wieder aufgerollt wird. Bei diesem Vorgang trifft einer der Steuernocken an den Planetenrädern 34, 36 auf einem Betätigungsarm an der Schaltwippe 51 und verschwenkt diese, damit sie den Sensorhebel 24 anhebt. Das Gurtband wird nun wieder aufgewickelt, bis es am zu sichernden Kindersitz oder an der Last anliegt. Beim Versuch, Gurtband abzuwickeln, wird nun der Sperrmechanismus des Gurtaufrollers über die Betätigungsscheibe 16 aktiviert. Die erneute Umschaltung der Schaltwippe 51 erfolgt erst, wenn das Gurtband wieder nahezu vollständig aufgewickelt ist, durch Anstoßen eines weiteren Steuernockens der Planetenräder 34, 36 an der Schaltwippe 51.

## Patentansprüche

1. Gurtaufroller für Fahrzeugsicherheitsgurte, mit
a) einer in einem Gehäuse drehbar gelagerten Gurtspule;
b) einem Sperrmechanismus zur Blockierung der Gurtspulendrehung;
c) einem Auslösemechanismus, der eine relativ zur Gurtspule begrenzt verdrehbare Steuerscheibe (26) aufweist, durch deren Relativdrehung zur Gurtspule der Sperrmechanismus aktivierbar ist; und
d) einem Planetenzahnradgetriebe mit einem drehfest an die Gurtspule angeschlossenen Sonnenrad (32), einem gehäusefesten Hohlrad (38) und wenigstens einem Planetenrad (34, 36), das eine Außenverzahnung aufweist und mit dem Sonnenrad (32) und dem Hohlrad (38) in Eingriff steht sowie wenigstens einen Schaltnocken (44) aufweist;
e) wobei mittels an den Planetenrädern (34, 36) angebrachter Schaltnocken oder Schaltzähne eine Schaltwippe (51) mit zwei stabilen Schaltzuständen betätigbar ist, die in der ersten Schaltstellung den Sperrmechanismus aktiviert und in der zweiten Schaltstellung die Aktivierung des Sperrmechanismus durch den Auslösemechanismus zuläßt;
**gekennzeichnet durch**
f) eine zwischen einer Ausgangsstellung und einer Sperrstellung verschwenkbar gelagerte weitere Schaltwippe (42), die **durch** den Schaltnocken (44) in die Sperrstellung bewegbar ist, in der sie den Auslösemechanismus inaktiviert.

2. Gurtaufroller nach Anspruch 1, **dadurch gekennzeichnet, daß** die weitere Schaltwippe (42) in ihrer Sperrstellung die Steuerscheibe (26) drehfest mit der Gurtspule koppelt.

3. Gurtaufroller nach Anspruch 2, **dadurch gekennzeichnet, daß** die weitere Schaltwippe (42) in ihrer Sperrstellung ein Zahnrad (50) gleichzeitig mit einer Außenverzahnung der Steuerscheibe (26a) und einer Außenverzahnung (22a) an einer drehfest an die Gurtspule angeschlossenen Kupplungsscheibe (22) in Eingriff bringt.

4. Gurtaufroller nach einem der Ansprüche 1 bis 3, **dadurch gekennzeichnet; daß** die weitere Schaltwippe (42) in ihrer Sperrstellung einen Sensorhebel (24) eines fahrzeugsensitiven Auslösesensors (14) inaktiviert.

5. Gurtaufroller nach einem der Ansprüche 1 bis 4, **dadurch gekennzeichnet, daß** die weitere Schaltwippe (42) zwei Betätigungsarme (42a, 42b) aufweist und durch Anstoßen des Schaltnockens (44) an einem Betätigungsarm (42a) in die Sperrstellung sowie durch Anstoßen eines weiteren Schaltnockens, der an einem der Planetenräder (34, 36) angebracht ist, am anderen Betätigungsarm (42b) in die Ausgangsstellung zurückbewegt wird.

## Claims

1. A belt retractor for vehicle seat belts, comprising
a) a belt reel rotatably mounted in a housing;
b) a locking mechanism for blocking belt reel rotation;
c) an activating mechanism including a control disk (26) restrictedly rotatable in relation to the belt reel, the locking mechanism being activatable by the rotation of the control disk relative to the belt reel; and
d) a planetary gear including a sun wheel (32) connected to the belt reel for joint rotation therewith, a housing-fixed ring gear (38) and at least one planet wheel (34, 36) having an external toothing and engaging the sun wheel (32) and the ring gear (38) as well as having at least one switching cam (44);
e) a switching toggle (51) having two stable switching conditions being actuatable by means of switching cams or switching teeth fitted to the planet wheels (34, 36), the switching toggle in the first switching position activating the locking mechanism and in the second switching position permitting activation of the locking mechanism by the activating mechanism,
**characterized by**
f) a further switching toggle (42) which is mounted to swivel between a starting position and a locking position and is movable by the switching cam (44) into the locking position in which it deactivates the activating mechanism.

2. The belt retractor as set forth in claim 1, **characterized in that** in its locking position the further switching toggle (42) couples the control disk (26) to the belt reel so as to prevent relative rotation.

3. The belt retractor as set forth in claim 2, **characterized in that** in its locking position the further switching toggle (42) causes a gearwheel (50) to engage simultaneously an external toothing of the control disk (26a) and an external toothing (22a) on a coupling disk (22) which is connected to the belt reel for joint rotation therewith.

4. The belt retractor as set forth in any of claims 1 to 3, **characterized in that** in its locking position the further switching toggle (42) deactivates a sensor lever (24) of a vehicle-sensitive activating sensor (14).

5. The belt retractor as set forth in any of claims 1 to 4, **characterized in that** the further switching toggle (42) has two actuating arms (42a, 42b) and is moved into the locking position by the switching cam (44) coming into contact with one actuating arm (42a) and is moved back into the starting position by a further switching cam that is fitted to one of the planet wheels (34, 36) coming into contact with the other actuating arm (42b).

## Revendications

1. Enrouleur de ceinture pour ceintures de sécurité de véhicules. comportant
a) une bobine de ceinture montée rotative dans un boîtier ;
b) un mécanisme de blocage pour bloquer la rotation de la bobine de ceinture ;
c) un mécanisme de déclenchement qui présente une came de commande (26) à rotation limitée par rapport à la bobine de ceinture, dont la rotation relative par rapport à la bobine de ceinture permet d'activer le mécanisme de blocage ; et
d) un engrenage planétaire avec une roue solaire (32) raccordée de manière solidaire en rotation à la bobine de ceinture, une couronne de train planétaire (38) solidaire du boîtier et au moins une roue planétaire (34, 36) qui présente une denture extérieure et qui est en engagement avec la roue solaire (32) et la couronne de train planétaire (38) et qui présente au moins une came de commutation (44) ;
e) une bascule de commutation (51), avec deux états de commutation stables, pouvant être actionnée au moyen de cames de commutation ou de dents de commutation montées sur les roues planétaires (34, 36);
**caractérisé par**
f) une autre bascule de commutation (42) montée à basculement entre une position initiale et une position de blocage, laquelle peut être amenée par la came de commutation (44) dans la position de blocage dans laquelle elle inactive le mécanisme de déclenchement.

2. Enrouleur de ceinture selon la revendication 1, **caractérisé en ce que** dans sa position de blocage, l'autre bascule de commutation (42) accouple la came de commande (26) de façon solidaire en rotation avec la bobine de ceinture.

3. Enrouleur de ceinture selon la revendication 2, **caractérisé en ce que** dans sa position de blocage, l'autre bascule de commutation (42) met en engagement une roue dentée (50) simultanément avec la denture extérieure de la came de commande (26a) et une denture extérieure (22a) sur le disque d'accouplement (22) raccordé solidaire en rotation avec la bobine de ceinture.

4. Enrouleur de ceinture selon l'une des revendications 1 à 3, **caractérisé** en ce dans sa position de blocage, l'autre bascule de commutation (42) inactive un levier de détecteur (24) d'un détecteur de déclenchement (14) sensible aux mouvements du véhicule.

5. Enrouleur de ceinture selon l'une des revendications 1 à 4, **caractérisé en ce que** l'autre bascule de commutation (42) présente deux bras d'actionnement (42a, 42b) et **en ce qu'**elle est ramenée dans la position de blocage en faisant buter la came de commutation (44) contre un bras d'actionnement (42a) et dans la position initiale en faisant buter une autre came de commutation, qui est montée sur une des roues planétaires (34, 36), contre l'autre bras d'actionnement (42b).
